## Europäisches Patentamt
### European Patent Office
### Office européen des brevets

(19)

(11) Veröffentlichungsnummer: **0 113 928**
**B1**

(12) **EUROPÄISCHE PATENTSCHRIFT**

(45) Veröffentlichungstag der Patentschrift:
**09.04.86**

(51) Int. Cl.⁴: **G 01 F 1/58**

(21) Anmeldenummer: **83200069.9**

(22) Anmeldetag: **18.01.83**

(54) **Messwertaufnehmer für magnetisch-induktive Durchflussmessgeräte.**

(43) Veröffentlichungstag der Anmeldung:
**25.07.84 Patentblatt 84/30**

(45) Bekanntmachung des Hinweises auf die Patenterteilung:
**09.04.86 Patentblatt 86/15**

(84) Benannte Vertragsstaaten:
**AT BE CH DE FR GB IT LI LU NL SE**

(56) Entgegenhaltungen:
**DE - A - 2 950 039**
**GB - A - 2 068 122**
**US - A - 3 746 896**
**US - A - 3 750 468**

(73) Patentinhaber: **RHEOMETRON AG,**
**Schützenmattstrasse 43, CH-4003 Basel (CH)**

(72) Erfinder: **Rademacher-Dubbik, Kristian, Waldsteige 14,**
**D-4100 Duisburg 1 (DE)**

(74) Vertreter: **Ackmann, Günther, Dr.-Ing.,**
**Claubergstrasse 24 Postfach 10 09 22,**
**D-4100 Duisburg 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung betrifft einen Meßwertaufnehmer für magnetisch-induktive Durchflußmeßgeräte, der aus einem elektrisch isolierenden keramischen Meßrohr mit dicht eingesinterten Meßelektroden besteht.

Magnetisch-induktiven Durchflußmeßgeräten ist ein rohrförmiger Meßwertaufnehmer zugeordnet, der zwischen den Anschlußflanschen einer Rohrleitung befestigt wird und durch den eine leitfähige Flüssigkeit quer zur Richtung eines Magnetfeldes strömt. Die der Strömungsgeschwindigkeit proportionale Spannung wird an zwei Meßelektroden abgegriffen und über Stromleiter einem Meßwertumformer zugeführt. In der Regel besteht das Meßrohr des Meßwertaufnehmers aus einem am Innenmantel mit einer Isolierschicht versehenen Metallrohr oder aus einem Kunststoffrohr. Meistens werden metallische Meßelektroden verwendet, die in das Meßrohr eingesetzt und abgedichtet werden. Nach der DE-C2-29 50 039 sollen die Elektroden aus pulver- oder faserförmigen Teilchen eines elektrisch leitenden Stoffes, wie Kohlenstoff, Graphit oder Metall bestehen, welche im Elektrodenbereich in die elektrisch isolierende Auskleidung eingebettet sind.

Weiterhin ist aus der DE-Al-23 30 593 ein Meßwertaufnehmer mit einem keramischen Meßrohr bekannt geworden, das unter Zwischenlage von Dichtungsringen zwischen zwei Flanschen einer Rohrleitung eingespannt werden kann. Bei dem in der Art von Keramik-Elektroisolatoren hergestellten Meßrohr sind die Elektroden am glasierten Innenmantel aufgebrannt und mit Leitungsdrähten versehen, die durch radiale Bohrungen führen. Zur Bildung eines besonders dichten und widerstandsfähigen keramischen Meßrohres, welches auch für unter hohem Druck stehende, aggressive und heiße Flüssigkeiten geeignet sein soll, ist in der älteren WO-83/02000 (Stand der Technik nach Ant 54(3) EPÜ) vorgeschlagen worden, das Meßrohr aus einem dichtgebrannten keramischen Werkstoff zu fertigen, in den der Schaft der metallischen Meßelektroden dicht eingesintert ist. Unterschiedliche Wärmeausdehnung des keramischen Werkstoffs und der metallischen Meßelektroden können jedoch beim Abkühlen zu Spannungen und Rissen führen. Die aus der DE-C2-29 50 039 bekannte Einbettung elektrisch leitender Partikel in die Isolierschicht des Meßrohres ist auf keramische Meßrohre wegen der hohen Sintertemperaturen des keramischen Werkstoffes nicht möglich.

Bei Meßwertaufnehmern ist es weiterhin bekannt, zwischen dessen Meßrohr und den Anschlußflanschen der Rohrleitung Erdungsringe anzubringen, die mit der leitenden Flüssigkeit in Berührung stehen und unmittelbar geerdet oder mit dem geerdeten Metallgehäuse des Meßwertaufnehmers leitend verbunden sind. Diese Erdungsringe verlangen jedoch auf ihren beiden Seiten Dichtungsringe. Eine solche Ausbildung ist umständlich und führt häufig zu Lecks. Einen zusätzlichen Arbeitsgang erfordert es auch, zur Bildung von Erdungsringen nach dem Sintern des keramischen Meßrohres Leiterbahnen herzustellen, indem eine Paste mit stromleitenden Partikeln aufgetragen und das keramische Meßrohr anschließend nochmals erwärmt wird, um einen auf der Oberfläche des Meßrohres fest verankerten dünnen Leiterfilm zu bilden (vgl. WO-83/02000).

Demgegenüber liegt der Erfindung die Aufgabe zugrunde, einen Meßwertaufnehmer der gattungsgemäßen Art mit absolut dicht eingesinterten Meßelektroden zu versehen, welche auch bei einem Temperaturwechsel nicht zu Spannungsrissen führen.

Diese Aufgabe wird erfindungsgemäß dadurch gelöst, daß als Meßelektroden Formkörper aus einem elektrisch leitfähigen keramischen Werkstoff vorgesehen sind.

In vorteilhafter Weise sind die aus einem leitfähigen keramischen Werkstoff bestehenden Meßelektroden vakuumdicht im keramischen Meßrohr eingesintert. Die aus keramischen Werkstoffen bestehenden Bauteile, nämlich das Meßrohr und die eingesinterten Meßelektroden, zeichnen sich durch eine gute Temperaturwechselbeständigkeit, Festigkeit, Korrosionsbeständigkeit und Abriebfestigkeit aus. Sie erfüllen damit die Anforderungen, die an das Meßrohr von Meßwertaufnehmern gestellt werden.

Während bei den bekannten magnetisch-induktiven Durchflußmeßgeräten, auch wenn diese ein keramisches Meßrohr mit eingesinterten metallischen Meßelektroden aufweisen, ein hydraulischer Transport von harten Feststoffen, wie Sand, Erz usw. wegen eines Abriebs der Meßelektroden nicht möglich war, erlaubt die erfindungsgemäße Ausbildung eine Durchflußmessung von harte Feststoffe enthaltenden Suspensionen.

Als elektrisch isolierender keramischer Werkstoff für das Meßrohr eignet sich beispielsweise besonders gut Silizium-Nitrid, während für die Meßelektroden ein elektrisch gut leitfähiger keramischer Werkstoff beispielsweise Silizium-Carbid ist. Beide keramischen Werkstoffe lassen sich mit verschiedenen elektrischen Leitfähigkeiten bzw. spezifischen Widerständen herstellen, so daß auch für das isolierende Meßrohr und die elektrisch leitenden Meßelektroden eine geeignete Auswahl getroffen werden kann. Beispielsweise kann der spezifische Widerstand von $Si_3N_4$ zwischen Temperaturen von 20 °C und 300 °C etwa $10^{15}$ bis $10^{10}$ $\Omega$ m betragen, während der von SiC in diesem Temperaturbereich unter $10^{-1}$ $\Omega$ m liegt. Je nach den technischen Verhältnissen kann der spezifische Widerstand des keramischen Werkstoffes für die Meßelektroden bis zu $10^9$ $\Omega$ m betragen. An Stelle von Silicium-Nitrid und Silizium-Carbid können auch andere keramische Werkstoffe mit entsprechenden spezifischen Widerständen benutzt werden.

In einer Weiterentwicklung der Erfindungslehre läßt sich anwenigstens einer Stirnseite des keramischen Meßrohres ein Erdungsring aus einem elektrisch leitfähigen keramischen Werkstoff ansintern. Ein solcher keramischer Erdungsring hat die gleichen Vorteile wie die eingesinterten keramischen Meßelektroden.

Das dichte Einsintern der Meßelektroden bzw. Ansintern der Erdungsringe kann nach verschiedenen Verfahren erfolgen. Beispielsweise können die aus ungebrannten Rohstoffen gebildeten Formkörper für die Meßelektroden und Erdungsringe an den noch ungebrannten Formling des Meßrohres eingeformt oder angeformt und anschließend keramisch gebrannt werden. Nach einer anderen Methode können die Formkörper und das Meßrohr zunächst als selbständige Körper vorgebrannt, dann miteinander durch keramische Masse verkittet und anschließend nochmals gebrannt werden.

In der Zeichnung sind zwei Ausführungsbeispiele dargestellt; es zeigt:

Fig. 1 ein keramisches Meßrohr mit zwei keramischen Meßelektroden und einem Erdungsring in einer perspektivischen Darstellung und

Fig. 2 einen Schnitt durch ein keramisches Meßrohr mit zwei verschieden ausgebildeten keramischen Meßelektroden.

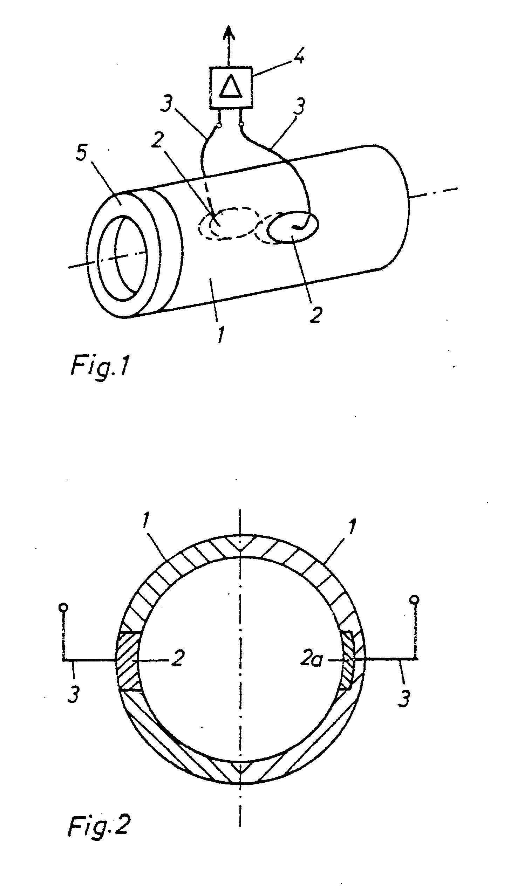

Das in Fig. 1 dargestellte keramische Meßrohr 1 ist Teil eines Meßwertaufnehmers für ein magnetischinduktives Durchflußmeßgerät. Die dem meßwertaufnehmer zugehörigen Teile, wie Magnetspulen, Gehäuse u. dgl. sind nicht dargestellt.

Das keramische Meßrohr 1 besteht aus einem keramischen Werkstoff mit im wesentlichen elektrisch isolierenden Eigenschaften. Außerdem ist der keramische Werkstoff so ausgewählt, daß das Meßrohr 1 eine hohe Temperaturwechselbeständigkeit, Festigkeit, Abriebsfestigkeit und Korrisionsbeständigkeit aufweist. Besonders geeignet ist Silizium-Nitrid.

Als Meßelektroden 2 sind Formkörper aus einem elektrisch leitfähigen keramischen Werkstoff vorgesehen. Die beiden Meßelektroden 2 sind über Stromleiter 3 an einen Verstärker 4 angeschlossen, dessen Ausgang einem Meßwertumformer (nicht dargestellt) zugeführt wird. Diese Formkörper sollen möglichst die gleichen sonstigen Werkstoffeigenschaften, wie hohe Temperaturwechselbeständigkeit, Festigkeit, Abriebsfestigkeit und Korrosionsbeständigkeit aufweisen. Silizium-Carbid gehört zu einem besonders geeigneten Werkstoff für die keramischen Meßelektroden 2.

Je nach den gewünschten Eigenschaften des Meßwertaufnehmers können aber auch andere keramische Werkstoffe für das Meßrohr und die Meßelektroden ausgewählt werden.

In Anwendungsfällen, wo das keramische Meßrohr 1 einer Erdung bedarf, kann durch eine einfache Fortentwicklung an wenigstens einer Stirnseite ein Erdungsring 5 aus einem elektrisch leitfähigen keramischen Werkstoff angesintert sein. Vorzugsweise wird hierfür der gleiche keramische Werkstoff verwendet, aus dem auch die Meßelektroden 2 bestehen. Erforderlichenfalls können auch beide Stirnenden des Meßrohres 1 mit einem Erdungsring 5 versehen werden.

Zum dichten Einsintern der Meßelektroden 2 bzw. Ansintern der Erdungsringe 5 sind verschiedene Verfahren geeignet. Beispielsweise können die aus ungebrannten Rohstoffen gebildeten Formkörper für die Meßelektroden und Erdungsringe an den noch ungebrannten Formling des Meßrohres eingeformt oder angeformt und anschließend keramisch gebrannt werden. Nach einer anderen Methode können die Formkörper und das Meßrohr zunächst als selbständige Körper vorgebrannt, dann miteinander durch keramische Masse verkittet und anschließend nochmals gebrannt werden.

Für die Ausbildung und Anordnung der keramischen Meßelektroden 2 sind in Abhängigkeit von den gewünschten Eigenschaften und gewählten Herstellungsmethode zahlreiche Varianten möglich. Statt des in Fig. 1 gezeigten ovalen Grundrisses sind auch Ausführungen mit einem kreisrunden, quadratischen, rechteckigen Grundriß möglich. Die keramischen Meßelektroden 2 können in ihrer "Dicke" der Wandstärke des keramischen Meßrohres 1 entsprechen oder dünner ausgebildet sein, wie es beispielsweise für die Meßelektrode 2a in der rechten Hälfte der Fig. 2 dargestellt ist. Werden vorgeformte und eventuell vorgebrannte keramische Formkörper in entsprechend ausgebildete Ausschnitte in der Wandung des Meßrohres eingesetzt, können die Ränder auch konisch geformt sein. Im Falle des Einkittens wird vorzugsweise eine keramische Kittmasse verwendet, die insbesondere hinsichtlich ihrer Wärmeausdehnung den beiden keramischen Werkstoffen für das Meßrohr 1 bzw. für die Meßelektroden 2 entspricht. In Abwandlung der gezeigten Ausführungen kann ein Meßrohr 1 statt mit zwei auch mit mehreren keramischen Meßelektroden 2 ausgerüstet sein.

## Patentansprüche:

1. Meßwertaufnehmer für magnetisch-induktive Durchflußmeßgeräte, bestehend aus einem elektrisch isolierenden keramischen Meßrohr (1) mit eingesinterten Meßelektroden (2), dadurch gekennzeichnet, daß als Meßelektroden (2) Formkörper aus einem elektrisch leitfähigen keramischen Werkstoff vorgesehen sind.

2. Meßwertaufnehmer nach Anspruch 1, dadurch gekennzeichnet, daß das Meßrohr (1) aus Silizium-Nitrid und die Meßelektroden (2) aus Silizium-Carbid bestehen.

3. Meßwertaufnehmer nach Anspruch 1 oder 2, dadurch gekennzeichnet, daß an wenigstens einer Stirnseite des keramischen Meßrohres (1) ein Erdungsring (5) aus einem elektrisch leitfähigen keramischen Werkstoff angesintert ist.

## Claims

1. A transducer for magnetic-inductive flowmeasuring devices, consisting of an electrically insulating ceramic measuring tube (1) having measuring electrodes (2) sintered therein, characterised in that the measuring electrodes (2) are mouldings made from an electrically conductive ceramic material.

2. A transducer according to claim 1, characterised in that the measuring tube (1) consists of silicon nitride and the measuring electrodes (2) of silicon carbide.

3. A transducer according to claim 1 or 2, characterised in that an earthing ring (5) consisting of an electrically conductive ceramic material is sintered on at least one end face of the ceramic measuring tube (1).

## Revendications

1. Capteur de mesure pour des débimètres à induction magnétique, constitué par un tube de mesure (1) céramique électriquement isolant et dans lequel sont insérées par frittage des électrodes de mesure (2), caractérisé par le fait qu'il est prévu, en tant qu'électrodes de mesure (2), des pièces de forme constituées en un matériau céramique électriquement conducteur.

2. Capteur de mesure suivant la revendication 1, caractérisé par le fait que le tube de mesure (1) est constitué par du nitrure de silicium et que les électrodes de mesure (2) sont constituées par du carbure de silicium.

3. Capteur de mesure suivant la revendication 1 ou 2, caractérisé par le fait qu'un anneau (5) de mise à la terre, constitué en un matériau céramique électriquement conducteur est fixé par frittage sur au moins une face frontale du tube de mesure céramique (1).

Fig.1

Fig.2